Europäisches Patentamt

European Patent Office

Office européen des brevets

(11) Veröffentlichungsnummer: **0 514 852 A1**

## EUROPÄISCHE PATENTANMELDUNG

(21) Anmeldenummer: **92108481.0**

(22) Anmeldetag: **20.05.92**

(51) Int. Cl.5: **G09F 9/37**

(30) Priorität: **23.05.91 DE 9106321 U**

(43) Veröffentlichungstag der Anmeldung:
**25.11.92 Patentblatt 92/48**

(84) Benannte Vertragsstaaten:
**BE DE FR GB IT NL**

(71) Anmelder: **Daxer, Ulrich**
**Unterheising 3**
**W-8408 Barbing(DE)**

(72) Erfinder: **Daxer, Ulrich**
**Unterheising 3**
**W-8408 Barbing(DE)**

(74) Vertreter: **Graf, Helmut, Dipl.-Ing.**
**Greflinger Strasse 7, Postfach 10 08 26**
**W-8400 Regensburg 1(DE)**

(54) **Pferdekopfnummer.**

(57) Die Erfindung bezieht sich auf eine Pferdekopf-nummer mit einem plattenartigen Träger, der an einer Vorderseite wenigstens eine veränderbare Zif-fer oder Zahl aufweist. Die Erfindung zeichnet sich dadurch aus, daß die wenigstens eine Ziffer eine Mehrsegmentziffer mit mehreren Anzeigesegmenten ist, von denen jedes von einem an der Vorderseite des Trägers vorgesehenen Fenster und einem im Bereich dieses Fensters angeordneten Anzeigeele-ment gebildet ist, welches um eine Achse drehbar am Träger gelagert ist und wenigstens zwei Oberflächenbereiche unterschiedlicher Farbgebung und/oder Helligkeit aufweist, von denen jeder wahlweise im Bereich des Fensters bei entsprechenden Drehen des Anzeigeelementes sichtbar ist.

Fig. 1

EP 0 514 852 A1

Die Erfindung bezieht sich auf eine Pferdekopfnummer gemäß Oberbegriff Patentanspruch 1.

Bei Turnieren ist es allgemein üblich, die teilnehmenden Pferde unter Verwendung sogenannter Pferdekopfnummern mit der entsprechenden Teilnehmernummer zu kennzeichnen.

Diese Teilnehmernummern werden in der Regel den Anmeldeeingängen zu einem Turnier entsprechend vergeben und sind daher von Turnier zu Turnier sehr unterschiedlich.

Um diesem Umstand Rechnung zu tragen, sind u.a. bereits sogenannten Pferdekopfnummern bekannt, die ein Ändern der Teilnehmernummer gestatten und hierfür aus einem plattenartigen Träger aus Kunststoff bestehen, an welchem Ziffern austauschbar vorgesehen werden können, und zwar beispielsweise in der Form, daß durch Austauschen der Ziffern jede beliebige dreistellige Zahl zwischen 1 und 999 gebildet werden kann.

Nachteilig ist, daß bei diesen bekannten Pferdekopfnummern jeweils eine Vielzahl von Ziffern lose zum Träger mitgeführt werden müssen, um die jeweilige Teilnehmernummer während des Turniers auf den betreffenden Träger darstellen zu können. Problematisch ist u.a. insbes. auch, daß die lose mitgeführten Ziffern leicht verlorengehen können.

Aufgabe der Erfindung ist es, eine Pferdekopfnummer aufzuzeigen, die diese Nachteile vermeidet.

Zur Lösung dieser Aufgabe ist eine Pferdekopfnummer entsprechend dem kennzeichnenden des Patentanspruches 1 ausgebildet.

Bei der erfindungsgemäßen Pferdekopfnummer sind am Träger wenigstens eine als Mehrsegmentanzeige, bevorzugt jedoch mehrere als Mehrsegmentanzeige ausgebildete Ziffern vorgesehen. Durch Drehen der einzelnen, die Segmente der wenigstens einen Mehrsegmentanzeige bildenden Anzeigeelemente ist es möglich, mit dieser Mehrsegmentanzeige jede Ziffer zwischen 0 und 9 darzustellen, und zwar bei hellgrundiger, beispielsweise bei weißer Vorderseite des Trägers durch den jeweils dunkleren Flächenbereich der Anzeigeelemente bzw. umgekehrt bei dunkelfarbiger, vorzugsweise schwarzer Vorderseite des Trägers durch die hellen Bereiche der Anzeigeelemente.

Bei einer bevorzugten Ausführungsform der Erfindung sind die Anzeigeelemente um eine Achse drehbar, die parallel zur Ebene der Vorderseite des Trägers liegt. Weiterhin sind die Anzeigeelemente um diese Achse rotationssymmetrisch ausgebildet, und zwar bevorzugt als Walzen bzw. als zumindest in einem Teilbereich teilzylinderförmige Elemente. Die Anzeigeelemente stehen dann mit einem Teilbereich ihres Umfangs über die Vorderseite, bevorzugt aber auch über die Rückseite des Trägers vor, so daß ein einfaches manuelles Drehen des jeweiligen Anzeigeelementes möglich ist.

Weiterbildungen der Erfindung sind Gegenstand der Unteransprüche.

Die Erfindung wird im folgenden anhand der Figuren an einem Ausführungsbeispiel näher erläutert. Es zeigen:

Fig. 1    in vereinfachter Darstellung und in Draufsicht eine Pferdekopfnummer gemäß der Erfindung;

Fig. 2    einen Schnitt entsprechend der Linie I-I der Fig. 1;

Fig. 3    einen Längsschnitt durch eine Walze der Sieben-Segmente-Displays;

Fig. 4    eine Draufsicht auf eine Hälfte einer Walze.

Die in den Figuren dargestellte Pferdekopfnummer ist im wesentlichen als dreistellige Sieben-Segment-Anzeige ausgebildet und besteht im wesentlichen aus zwei aus Kunststoff gefertigten Platten 1 und 2, von denen die Platte 1 die Rückseite und die Platte 2 die Vorderseite der Pferdekopfnummer bildet und die durch angeformte Zapfen und Rastnasen, beispielsweise durch an die Platte 1 angeformte Zapfen 3 und Rastnasen 4, die in Öffnungen der Platte 2 eingreifen bzw. dort vorgesehene Rastflächen hintergreifen, miteinander verbunden sind, und zwar derart, daß die beiden, den gleich großen rechteckförmigen Zuschnitt aufweisenden Platten 1 und 2 mit jeweils einer Oberflächenseite flächig gegeneinander anliegen.

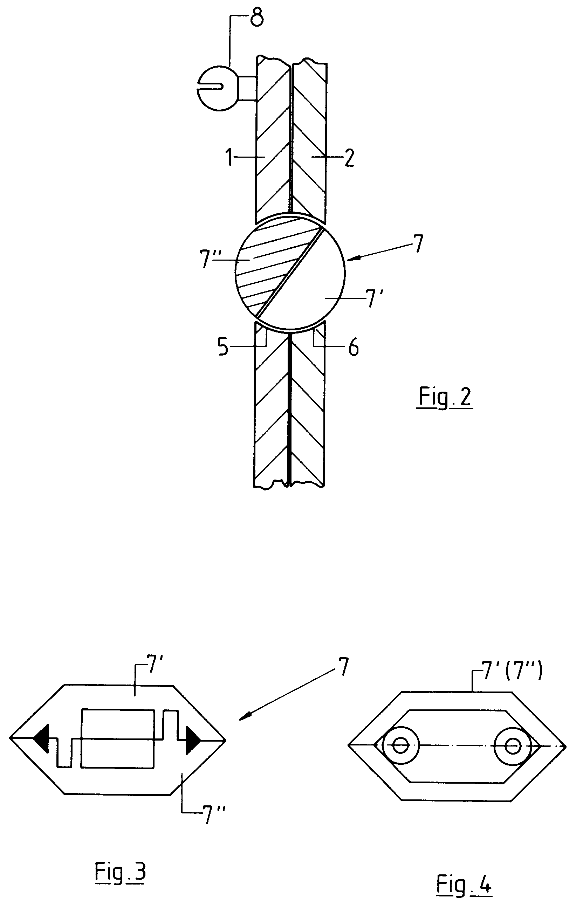

In den Platten 1 und 2 sind jeweils fensterartige Ausnehmungen 5 bzw. 6 gebildet, die bei der dargestellten Ausführungsform jeweils eine langgestreckte Querschnittsform mit spitz zulaufenden Enden an den beiden einander gegenüberliegenden Schmalseiten aufweisen. Die Ausnehmungen 5 und 6, von denen insgesamt jeweils einundzwanzig Ausnehmungen 5 an der Platte 1 und einundzwanzig Ausnehmungen 6 an der Platte 2 vorgesehen sind, und zwar jeweils in den drei Gruppen I, II und III sind in jeder Gruppe in der den Segmenten einer Sieben-Segment-Anzeige positioniert. Wie die Fig. 2 zeigt, sind die Ausnehmungen 5 und die Ausnehmungen 6 so angeordnet, daß jeweils eine Ausnehmung 5 der Platte 1 mit einer Ausnehmung 6 der Platte 2 deckungsgleich liegt. Hierbei sind die Ausnehmungen 5 und 6 so geformt, daß deren Querschnitt an den außenliegenden Seiten der Platten 1 und 2, d.h. an der Vorderseite und Rückseite der Pferdekopfnummer kleiner ist als im Bereich der innenliegenden Seite, an der die Platten 1 und 2 gegeneinander anliegen. Die Querschnittsabmessungen der Ausnehmungen 5 und 6 sind weiterhin so gewählt, daß in jeder von einer Ausnehmung 5 und einer Ausnehmung 6 gebildeten Öffnung eine ein Anzeigesegment bildende Walze 7 in den Platten 1 und 2 unverlierbar gehalten ist. Jede Walze 7 besitzt einen kreiszylinderförmigen Querschnitt und ist an deren beiden Enden spitz zulaufend ausgebildet. Jede Walze 7 ist so in der von den beiden Platten 1 und 2 gebildeten Plattenanordnung gehalten, daß sie mit einem Teil ihrer Umfangsfläche geringfügig über die Vorderseite sowie Rückseite der Pferdekopfnummer vorsteht, im übrigen aber von dem Material der Platten bzw. dem Rand der Ausnehmungen 5 und 6 über einen Winkelbereich größer als 180° umschlossen und somit unverlierbar in der von den Platten 1 und 2 gebildeten Plattenanordnung gehalten ist. Sämtliche Walzen 7 besitzen die gleiche Form und Größe. Dementsprechend sind auch sämtliche Ausnehmungen 5 und 6 mit gleicher Form und Größe hergestellt. Jede Walze 7 ist zweiteilig ausgeführt, und zwar in bezug auf eine die Längsachse der Walze 7 einschließenden Mittelebene. Die eine Hälfte 7' jeder Walze 7 besteht dabei aus einem hellen, vorzugsweise weißen Kunststoffmaterial und die andere Hälfte 7'' aus einem dunklen, vorzugsweise schwarzen Kunststoffmaterial. Die beiden Hälften 7' und 7'' sind durch Zapfen und/oder Kleben oder Ultraschweißen miteinander verbunden.

Zum Montieren der Pferdekopfnummern werden zunächst die Walzen 7 durch Verbinden jeweils einer Hälfte 7' mit einer Hälfte 7'' hergestellt. Diese Hälften werden dann in die Ausnehmungen einer Platte, beispielsweise der Platte 1 eingesetzt, und zwar von der die später innenliegende Seite der Plattenanordnung bildenden Oberflächenseite her. Anschließend wird die Platte 2 aufgesetzt und mittels der Zapfen 3 und Rastelemente 4 an der Platte 1 festgelegt. Die Maße und Toleranzen sind dabei so gewählt, daß nach dem Zusammenfügen die Walzen 7 nicht nur in der oben bereits beschriebenen Weise in der von den Platten 1 und 2 gebildeten Plattenanordnung gehalten sind, sondern um ihre Längsachse jeweils drehbar sind, wobei für dieses Drehen allerdings ein gewisser Kraftaufwand notwendig ist. Hierfür liegen die Platten 1 und 2 im Bereich der Ausnehmungen 5 und 6 mit gewisser Kraft federnd gegen die jeweilige Walze 7 an. Die Pferdekopfnummer zeichnet sich durch eine sehr einfache Konstruktion und Montierbarkeit aus.

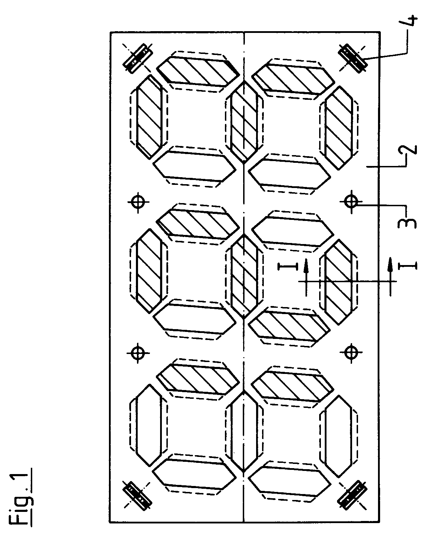

Weist zumindest die Vorderseite der Pferdekopfnummer bildende Platte eine Farbgebung auf, die gleich der Farbgebung der Hälften 7' der Walzen 7 ist, d.h. ist die Platte 2 ebenfalls weiß ausgebildet, so werden die dunkelfarbigen bzw. schwarzen Hälften 7'' der Walzen 7 zur Darstellung der jeweiligen Ziffer der Teilnehmernummer verwendet, d.h. bei der Darstellung der Teilnehmernummer 123 werden die in der Fig. 1 schraffierten Segmente bzw. Walzen 7 so gedreht, daß sie mit ihrer dunklen bzw. schwarzen Hälfte 7'' durch die Ausnehmungen 6 der Platte 3 sichtbar sind.

Grundsätzlich ist es aber auch möglich, zumindest die Platte 2 dunkelfarbig bzw. schwarz auszubilden. In diesem Fall wird dann die betreffende Teilnehmernummer nicht in dunkler Farbe bzw. schwarz auf hellem Untergrund, sondern in heller Farbe bzw. in weiß auf dunklem bzw. schwarzem Untergrund dargestellt.

Zur Befestigung der Pferdekopfnummer sind an der Rückseite bzw. an der diese Rückseite bildenden Oberflächenseite der Platte 1 in Öffnungen von Riemen einrastbare Zapfen 8 angeformt.

Die Erfindung wurde voranstehend an einem Ausführungsbeispiel beschrieben. Es versteht sich, daß Abwandlungen sowie Änderungen möglich sind, ohne daß dadurch der der Erfindung zugrundeliegende Erfindungsgedanke verlassen wird. So ist es beispielsweise auch möglich, jedes Anzeigeelement bzw. jede Walze 7 einstückig derart herzustellen, daß in eine geeignete Form zunächst ein dunkelfabriger Kunststoff und anschließend ein hellfarbiger Kunststoff oder umgekehrt eingebracht wird, so daß sich jede Walze 7 im Querschnitt aus einem dunkelfarbigen bzw. schwarzen Teil und einem hellfarbigen bzw. weißen Teil zusammensetzt.

**Patentansprüche**

1. Pferdekopfnummer mit einem plattenartigen Träger (1, 2), der an einer Vorderseite wenigstens eine veränderbare Ziffer oder Zahl aufweist, **dadurch gekennzeichnet,** daß die wenigstens eine Ziffer eine Mehrsegmentziffer mit mehreren Anzeigesegmenten ist, von denen jedes von einem an der Vorderseite des Trägers (1, 2) vorgesehenen Fenster und einem im Bereich dieses Fensters angeordneten Anzeigeelement (7) gebildet ist, welches um eine Achse drehbar am Träger (1, 2) gelagert ist und wenigstens zwei Oberflächenbereiche unterschiedlicher Farbgebung und/oder Helligkeit aufweist, von denen jeder wahlweise im Bereich des Fensters bei entsprechenden Drehen des Anzeigeelementes (7) sichtbar ist, daß der Träger zweiteilig aus zwei miteinander verbundenen Trägerteilen (1, 2) hergestellt ist, die in einer Ebene miteinander verbunden sind, in der die Achsen der Anzeigeelemente (7) liegen bzw. die parallel zu einer diese Achsen einschließenden Ebene verläuft, und daß sich die Anzeigeelemente (7) jeweils aus zwei Querschnittsbereichen oder Teilen mit unterschiedlicher Farbgebung und/oder Helligkeit zusammensetzen.

2. Pferdekopfnummer nach Anspruch 1, dadurch gekennzeichnet, daß die wenigstens eine Ziffer als Sieben-Segment-Anzeige ausgebildet ist.

3. Pferdekopfnummer nach Anspruch 1 oder 2, dadurch gekennzeichnet, daß das jeweilige Anzeigeelement um eine Achse parallel zu der Körperseite des Trägers (1, 2) drehbar gelagert ist.

4. Pferdekopfnummer nach Anspruch 3, dadurch gekennzeichnet, daß das Anzeigeelement (7) um die Achse zumindest im wesentlichen rotationssymmetrisch ausgebildet ist, und daß im Träger (1, 2) für jedes Anzeigeelement (7) eine das Fenster bildende Ausnehmung (5, 6) vorgesehen ist, in der das Anzeigeelement (7) aufgenommen ist und die das Anzeigeelement (7) auf einem Teilbereich seines Umfangs umschließt, die wenigstens gleich 180° ist.

5. Pferdekopfnummer nach einem der Ansprüche 1 - 4, dadurch gekennzeichnet, daß das Anzeigeelement (7) mit einem Teil seines Umfangs zumindest über die Vorderseite des Trägers (1, 2) vorsteht.

6. Pferdekopfnummer nach einem der Ansprüche 1 - 5, dadurch gekennzeichnet, daß die Anzeigeelemente (7) zumindest jeweils in einem Teilbereich walzen- oder kreiszylinderförmig ausgebildet sind.

7. Pferdekopfnummer nach einem der Ansprüche 1 - 6, dadurch gekennzeichnet, daß die Anzeigeelemente (7) an wenigstens einem Ende spitz zulaufend ausgebildet sind.

8. Pferdekopfnummer nach einem der Ansprüche 1 - 7, dadurch gekennzeichnet, daß der Träger plattenförmig, vorzugsweise aus zwei miteinander verbundenen Platten (1, 2) hergestellt ist.

9. Pferdekopfnummer nach einem der Ansprüche 1 - 8, dadurch gekennzeichnet, daß der Träger (1, 2) und/oder die Anzeigeelemente (7) aus Kunststoff gefertigt sind.

10. Pferdekopfnummer nach einem der vorhergehenden Ansprüche, dadurch gekennzeichnet, daß die beiden Teile (1, 2) des zweiteiligen Trägers durch Rastelemente und/oder -zapfen (3, 4) miteinander verbunden sind.

## Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 143 412 (IDEEE DESIGN GMBH) <br> * das ganze Dokument * <br> --- | 1-9 | G09F9/37 |
| A | EP-A-0 031 033 (C.TAMBURINI) <br> * das ganze Dokument * <br> ----- | 1-9 | |

| | RECHERCHIERTE SACHGEBIETE (Int. Cl.5 ) |
|---|---|
| | G09F <br> A63B |

Der vorliegende Recherchenbericht wurde für alle Patentansprüche erstellt

| Recherchenort | Abschlußdatum der Recherche | Prüfer |
|---|---|---|
| BERLIN | 31 JULI 1992 | P.TAYLOR |